# EUROPÄISCHE PATENTSCHRIFT

(11) **EP 0 730 989 B1**
(45) Veröffentlichungstag und Bekanntmachung des Hinweises auf die Patenterteilung: **01.09.1999**
(21) Anmeldenummer: 96102956.8
(22) Anmeldetag: 28.02.1996
(51) Int. Cl.: B60H 1/32, F25D 21/04

(54) **Verfahren und Schaltungsanordnung zur Ein-/Ausschaltsteuerung des Kompressors einer Kraftfahrzeug-Klimaanlage**
Method and circuit arrangement for the on/off switching of the compressor of a vehicle airconditioning
Méthode et circuit pour enclencher et déclencher le compresseur d'un système de conditionnement d'air pour véhicule

(30) Priorität: 04.03.1995 DE 19507667
(43) Veröffentlichungstag der Anmeldung: 11.09.1996
(73) Patentinhaber: Behr GmbH & Co., 70469 Stuttgart (DE)
(72) Erfinder: Lochmahr, Karl, 71665 Vaihingen/Enz (DE); Baruschke, Wilhelm, Dipl.-Ing., 73117 Wangen (DE); Speer, Markus, 74343 Sachsenheim (DE)
(74) Vertreter: Weller, Erich W.

(56) Entgegenhaltungen:
- EP-A- 0 396 017
- DE-A- 2 637 129
- DE-A- 3 836 989
- US-A- 4 412 424

## Beschreibung

Die Erfindung bezieht sich auf ein Verfahren zur Ein-/Ausschaltungsteuerung des Kompressors einer Kraftfahrzeug-Klimaanlage nach dem Oberbegriff des Anspruchs 1.

Es ist bekannt, daß bei solchen Klimaanlagen mit getaktet betriebenem Kompressor, bei denen der Kompressor abgeschaltet wird, wenn die von einem Verdampfertemperaturfühler gemessene Verdampfertemperatur einen vorgebbaren Abschaltwert unterschreitet, die tatsächliche Verdampfertemperatur nach einem jeweiligen Abschalten des Kompressors noch unter den vorgegebenen Abschaltwert absinkt. Dies ist durch die Trägheit des Verdampfertemperaturfühlers bedingt, die ihrerseits von der eingestellten Luftmenge des Verdampfergebläses und von der Ansaugtemperatur abhängt. Zudem wird auch nach Abschalten des Kompressors noch Kühlfluid verdampft, bis der zuvor vor dem Verdampfer aufgebaute Kühlfluiddruck abgebaut ist. Der durch diesen Effekt hervorgerufenen Gefahr einer Vereisung des Verdampfers wird herkömmlicherweise mit einer Vereisungsschutzmaßnahme begegnet, bei welcher ein Abschaltwert über 0°C fest vorgegeben wird, der ausreichend größer als 0°C ist, z.B. ca. 4°C, um auch im schlechtesten Fall geringsten Wärmetransports am Verdampfer, d.h. bei geringer Ansauglufttemperatur und minimaler Verdampfergebläsetätigkeit, eine Verdampfervereisung zu verhindern. Mit dieser Vorgehensweise wird in Kauf genommen, daß bei höheren Ansauglufttemperaturen und/oder höherer Verdampfergebläseleistung die Kälteleistung der Klimaanlage nicht vollständig ausgenutzt wird, da der Kompressor in diesen Situationen früher als erforderlich abgeschaltet wird.

Aus der Offenlegungsschrift DE 38 36 989 A1 ist ein Verfahren der eingangs genannten Art bekannt, bei dem der Kompressor abgeschaltet wird, wenn die gemessene Verdampfertemperatur einen Abschalttemperaturwert unterschreitet, der in Abhängigkeit von der Gebläsedrehzahlstufe eines Verdampfergebläses vorgegeben wird, wobei die Gebläsedrehzahlstufe ein Maß für die Strömungsgeschwindigkeit der vom Lüfter über den Verdampfer geführten Luft darstellt. Speziell sinkt der Abschalttemperaturwert linear mit steigender Gebläsedrehzahlstufe. Der Abschalttemperaturwert stellt gleichzeitig auch einen Einschalttemperaturwert dar, um den Kompressor jeweils wieder einzuschalten, wenn die gemessene Verdampfertemperatur den Einschalttemperaturwert überschreitet. Zum entsprechenden Ab- und Einschalten des Kompressors dient eine Schaltungsanordnung mit einem ansteuerbaren Relais, dessen Schaltstrecke im Stromversorgungspfad einer elektromagnetischen Kupplung für den Kompressor liegt. Das Relais wird über einen Schmitt-Trigger und einen vorgeschaltenen Operationsverstärker angesteuert, wobei letzterem eingangsseitig die gemessene Verdampfertemperatur zugeführt wird. Zur Berücksichtigung der Gebläsedrehzahlstufe wird eine entsprechende Signalinformation einem weiteren Eingang des Operationsverstärkers oder des Schmitt-Triggers zugeführt.

Der Erfindung liegt als technisches Problem die Bereitstellung eines Verfahrens und einer Schaltungsanordnung der eingangs genannten Art zugrunde, mit denen einerseits eine Verdampfervereisung zuverlässig verhindert wird und mit denen sich andererseits in jeder Betriebssituation eine möglichst hohe Kälteleistung der Klimaanlage erzielen läßt.

Dieses Problem wird durch ein Verfahren mit den Merkmalen des Anspruchs 1 sowie durch eine Schaltungsanordnung mit den Merkmalen des Anspruchs 4 gelöst. Dabei wird der Abschaltwert abhängig von der Verdampfergebläseleistung und/oder der Ansauglufttemperatur mit steigender Gebläseleistung bzw. mit steigender Ansauglufttemperatur fallend, jedoch in jedem Fall noch über 0°C liegend, vorgegeben. Auf diese Weise läßt sich zum einen ein zuverlässiger Vereisungsschutz in jeder Betriebssituation aufrechterhalten und zum anderen bei höherer Verdampfergebläseleistung und/oder höherer Ansauglufttemperatur eine höhere Kälteleistung als bei der oben genannten, herkömmlichen Vorgehensweise mit festem Abschalttemperaturwert erzielen, da in diesen Fällen der Kompressor erst später, d.h. bei kleineren Abschaltwerten, ausgeschaltet wird. Die Schaltungsanordnung nach Anspruch 4 ermöglicht die Ein-/Ausschaltsteuerung des Kompressors gemäß beliebig vorgebbaren Kennfeldern des Abschalttemperaturwertes in Abhängigkeit von der Verdampfergebläseleistung und/oder der Ansauglufttemperatur. Durch das Verfahren nach Anspruch 1 wird eine vorteilhafte Ein-/Ausschalthysterese bereitgestellt, wobei der Hystereseabstand zuverlässig vor zu häufigen Kompressorumschaltvorgängen der Vereisungsschutzregelung schützt.

In einer vorteilhaften Ausgestaltung des Verfahrens ist gemäß Anspruch 2 vorgesehen, den Abschalttemperaturwert von einem Maximalwert zwischen etwa 3,5°C und 4,0°C auf einen Minimalwert zwischen etwa 0,5°C und 1°C stetig fallend vorzugeben.

In Weiterbildung des Verfahrens nach Anspruch 3 wird der Abschalttemperaturwert in Form eines sowohl von der Verdampfergebläseleistung als auch von der Ansauglufttemperatur abhängigen Kennfeldes derart vorgegeben, daß er in Abhängigkeit von jeder der beiden Größen stetig bis auf einen konstanten Minimalwert abfällt.

Die gemäß Anspruch 5 weitergebildete Schaltungsanordnung ermöglicht in schaltungstechnisch einfacher Weise die Durchführung dieser an die Verdampfergebläseleistung und/oder die Ansauglufttemperatur angepaßten Ein-/Ausschaltsteuerung für den Kompressor.

Durch eine Ausgestaltung der Schaltungsanordnung gemäß Anspruch 6 wird erreicht, daß die Kompressorabschaltung sowohl in Abhängigkeit von der Verdampfergebläseleistung als auch in Abhängigkeit von der Ansauglufttemperatur entsprechend dem Verfahren nach Anspruch 3 erfolgt.

Die schaltungstechnische Ausgestaltung nach Anspruch 7 erfordert zum einen lediglich geringen schaltungstechnischen Aufwand und stellt zum anderen eine Anpassungsmöglichkeit zur Verfügung, um die Ein-/Ausschaltsteuerung an das Spannungssignal vom Verdampfergebläse und/oder an den Ansauglufttemperaturfühler anpassen zu können.

Eine bevorzugte Ausführungsform der Erfindung ist in den Zeichnungen dargestellt und wird nachfolgend beschrieben. Hierbei zeigen:
- Fig. 1: eine graphische Darstellung eines vorgegebenen Kennfeldes für den Verdampfertemperatur-Abschaltwert zur Kompressorabschaltung in einer Kraftfahrzeug-Klimaanlage,
- Fig. 2: ein Schaltbild einer diskreten elektrischen Schaltungsanordnung zur Ein-/Ausschaltsteuerung des Kompressors und
- Fig. 3: ein Blockschaltbild einer Schaltungsvariante, bei der die Ein-/Ausschaltsteuerung entsprechend einem Kennfeld nach Art von Fig. 1 über einen Mikroprozessor realisiert ist.

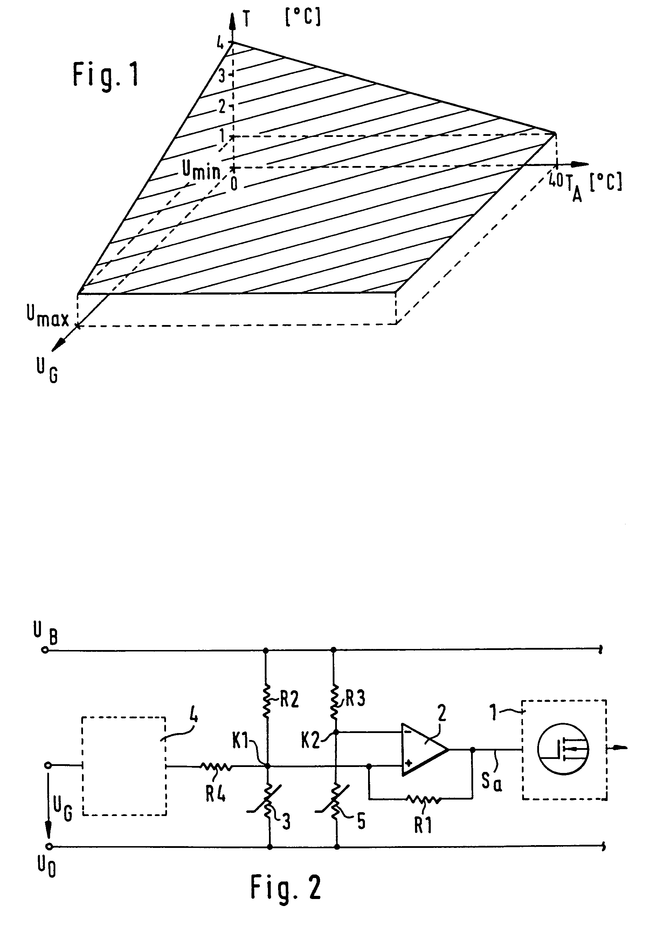

Fig. 1 illustriert ein vorgegebenes Kennfeld für die Temperatur eines Verdampfers einer Kraftfahrzeug-Klimaanlage, bei deren von einem Verdampfertemperaturfühler erfaßten Unterschreiten jeweils der zugehörige Kompressor der Klimaanlage abgeschaltet wird. Sobald die vom Verdampfertemperaturfühler erfaßte Verdampfertemperatur eine Einschalttemperatur überschreitet, die jeweils etwa 0,5°C über dieser kennfeldbestimmten Abschalttemperatur (Tₐᵤₛ) liegend vorgegeben wird, wird der Kompressor wieder eingeschaltet. Die um den Hystereseabstand von etwa 0,5°C höhere Einschalttemperatur führt zu einer gewünschten Einschalthysterese des solchermaßen getaktet betriebenen Kompressors zwecks Verhinderung von unvorteilhaft häufigen Kompressorumschaltungen.

Das Kennfeld gibt die Abschalttemperatur (Tₐᵤₛ) in Abhängigkeit von der die Verdampfergebläseleistung bestimmenden Gebläsespannung U_{G}) sowie in Abhängigkeit von der Temperatur (T_{A}) der vom Verdampfergebläse angesaugten Luft, die im Zuluftbetrieb im wesentlichen der Außentemperatur entspricht, vor. Wie aus Fig. 1 zu erkennen, nimmt die Abschalttemperatur (Tₐᵤₛ) bei minimaler Gebläsespannung (Uₘᵢₙ) und minimaler Ansauglufttemperatur (T_{A}≈0°C) ihren maximalen Wert von 4°C an. Ihren minimalen Wert von 1°C nimmt die Abschalttemperatur (Tₐᵤₛ) bei maximaler Gebläsespannung (Uₘₐₓ) unabhängig von der Ansauglufttemperatur (T_{A}) sowie bei einer Ansauglufttemperatur (T_{A}) von 40°C unabhängig von der Gebläsespannung (U_{G}) an. Zwischen diesen Eckwerten verläuft das Kennfeld für die Abschalttemperatur (Tₐᵤₛ) bei festgehaltener erster Größe jeweils linear abhängig von der anderen Größe. Der Maximalwert von 4°C stellt sicher, daß selbst im schlechtesten Fall minimaler Gebläseleistung (U_{G}) und minimaler Ansauglufttemperatur (T_{A}) die tatsächliche Verdampfertemperatur, die aufgrund der Trägheit des Verdampfertemperaturfühlers und der mit dem Abschalten des Kompressors wegen des erst allmählich abklingenden Kühlfluiddrucks auf der Hochdruckseite nicht schlagartig aufhörenden Kälteleistung der Klimaanlage unter die vorgegebene Abschalttemperatur (Tₐᵤₛ) absinkt, nicht bis auf 0°C fällt. Eine Vereisung des Verdampfers wird damit zuverlässig ausgeschlossen. Gleichzeitig erlaubt das vorgegebene Kennfeld eine niedrigere Abschalttemperatur (Tₐᵤₛ) und damit einen längeren aktiven Kühlbetrieb der Klimaanlage bei höherer Verdampfergebläseleistung (U_{G}) sowie auch bei höherer Ansauglufttemperatur (T_{A}), da in diesen beiden Fällen dem Verdampfer mehr Wärme zugeführt wird, die dessen Vereisung verhindert. Auf diese Weise läßt sich in diesen Betriebszuständen die Kälteleistung der Klimaanlage besser ausnutzen als bei Vorgabe eines unveränderlichen Abschalttemperaturwertes von ca. 4°C.

Selbstverständlich ist es bei einem Verdampfergebläse mit in Stufen einstellbarer Gebläseleistung möglich, anstelle des in Fig. 1 gezeigten, kontinuierlichen Kennfeldes jeder Gebläsestufe einen diskreten Abschalttemperaturwert (Tₐᵤₛ), gegebenenfalls wiederum in zusätzlicher Abhängigkeit von der Ansauglufttemperatur (T_{A}) zuzuordnen. In einem vereinfachten Verfahren zur Ein-/Ausschaltsteuerung des Kompressors kann vorgesehen sein, die Abschalttemperatur (Tₐᵤₛ) anstelle des zweidimensionalen Kennfeldes von Fig. 1 nur in Abhängigkeit von der Verdampfergebläseleistung (U_{G}) oder nur in Abhängigkeit von der Ansauglufttemperatur (T_{A}) variierend vorzugeben.

In Fig. 2 ist das Schaltbild einer diskreten elektrischen Schaltungsanordnung dargestellt, mit der sich das oben beschriebene Ein-/ Ausschaltsteuerungsverfahren für den Klimaanlagenkompressor in einer schaltungstechnisch einfachen Weise durchführen läßt. Die Schaltungsanordnung beinhaltet einen schematisch angedeuteten Halbleiter-Leistungsschalter (1), der in Pfeilrichtung Anschluß an eine Kompressorkupplung hat und mit dem der Kompressor ein- und ausschaltbar ist. Der Leistungsschalter (1) wird von einer Ansteuerstufe angesteuert, die einen Operationsverstärker (2) und einen Widerstand (R₁) beinhaltet, über den das Ausgangssignal (Sₐ) des Operationsverstärkers (2) an dessen nichtinvertierenden Eingang mitgekoppelt ist. An der Eingangsseite des Operationsverstärkers (2) befinden sich zwei Spannungsteiler parallel zwischen einem Massepotential (U₀) und einem positiven Bordspannungspotential (U_{B}) des Kraftfahrzeug-Bordnetzes. Der erste Spannungsteiler beinhaltet einen festen Widerstand (R₂) und einen Ansauglufttemperaturfühler (3), der einen von der Temperatur der vom Verdampfergebläse angesaugten Luft abhängigen elektrischen Widerstand besitzt. Der Mittelabgriff (K₁) dieses Spannungsteilers stellt einen Eingangsknoten dar, an den der nichtinvertierende Operationsverstärkereingang angeschlossen ist. Der zweite Spannungsteiler besteht aus einem festen Widerstand (R₃) und einem Verdampfertemperaturfühler (5), wobei an dem Mittelabgriff (K₂) dieses Spannungsteilers der invertierende Operationsverstärkereingang angeschlossen ist. Die Spannung (U_{G}) des Verdampfergebläses wird über eine Filter- und Schutzbeschaltung (4) sowie den Bewertungswiderstand (R₄) zum Mittelabgriff des ersten Spannungsteilers eingekoppelt.

Ersichtlich leistet diese Schaltung die geforderte, von der Verdampfergebläseleistung (U_{G}) und der Ansauglufttemperatur (T_{A}) abhängige Ein-/Ausschaltsteuerung für den Kompressor. Sobald die Verdampfergebläsespannung und damit auch die Verdampfergebläseleistung abnimmt, verringert sich das Potential am Mittelabgriff (K₁) des ersten Spannungsteilers und somit am nichtinvertierenden Operationsverstärkereingang, was zur Einstellung einer gemäß Fig. 1 gewünschten, höheren Abschalttemperatur (Tₐᵤₛ) führt. In gleicher Weise verringert sich das Potential am Mittelabgriff (K₁) des ersten Spannungsteilers bei geringer werdender Ansauglufttemperatur (T_{A}) und damit geringerem elektrischem Widerstand des Ansauglufttemperaturfühlers (3), wodurch ebenfalls wieder die gewünschte höhere Abschalttemperatur (Tₐᵤₛ) bereitgestellt wird.

In einer vereinfachten Schaltungsvariante kann anstelle des Ansauglufttemperaturfühlers (3) ein fester Widerstand angeordnet werden, wodurch eine Schaltung realisiert wird, bei der die Abschalttemperatur (Tₐᵤₛ) für den Kompressor lediglich in Abhängigkeit von der Verdampfergebläsespannung (U_{G}), d.h. der Verdampfergebläseleistung, eingestellt wird und zwar entsprechend der Schnittlinie des Kennfeldes von Fig. 1 mit der Vertikalebene bei minimaler Ansauglufttemperatur (T_{A}≈0°C). Selbstverständlich kann die Schaltung von Fig. 2 bei Bedarf auch dahingehend modifiziert werden, daß die Abschalttemperatur (Tₐᵤₛ) lediglich in Abhängigkeit der Ansauglufttemperatur (T_{A}) veränderbar vorgegeben wird, indem der Schaltungszweig, über den die Gebläsespannung (U_{G}) zum Mittelabgriff (K₁) des ersten Spannungsteilers geführt wird, weggelassen wird. Es versteht sich, daß der Fachmann die Schaltung je nach Bedarf so zu dimensionieren vermag, daß sie die Abschalttemperaturen (Tₐᵤₛ) entprechend dem gewünschten Kennfeld liefert, wobei das Kennfeld von Fig. 1 lediglich beispielhaft zu sehen ist und in Lage und Form anwendungsspezifisch modifiziert werden kann.

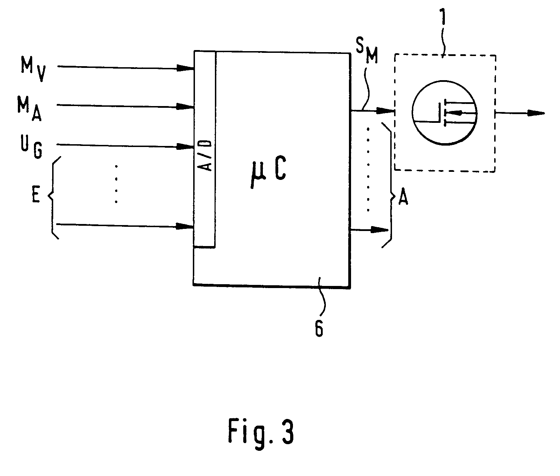

In Fig. 3 ist eine integrierte Schaltungsvariante mit einem Mikroprozessor (6) dargestellt, mit der sich das oben beschriebene Ein-/Ausschaltsteuerungsverfahren für den Klimaanlagenkompressor ohne zusätzlichen diskreten Schaltungsaufwand durchführen läßt. Sämtliche benötigten Ein- und Ausgangssignale stehen auch in einer konventionellen Steuerung zur Verfügung. Eingangsseitig werden dem Mikroprozessor (6) die Meßsignale (M_{V}, M_{A}) vom Verdampfertemperaturfühler und vom Ansauglufttemperaturfühler, die Verdampfergebläsespannung (U_{G}) sowie gegebenenfalls weitere Eingangssignale (E) zugeführt. Entsprechend dem abgelegten Kennfeld erzeugt der Mikroprozessor (6) daraus ein Ansteuersignal (S_{M}) für einen Halbleiter-Leistungsschalter (1) analog demjenigen von Fig. 1. Über weitere Ausgangssignale (A) vermag er hier nicht weiter interessierende Funktionen zu erfüllen. Das Kennfeld nach Art von Fig. 1 wird rein software-technisch im Mikroprozessor (6) abgelegt und bietet alle Freiheitsgrade in der speziellen Ausgestaltung, wovon das als ebene Fläche realisierte Kennfeld von Fig. 1 lediglich ein mögliches, einfaches Beispiel beliebiger, abspeicherbarer Kennfeldformen darstellt. Des weiteren kann auch die Wiedereinschalttemperatur entsprechend dem Kennfeld für die Abschalttemperatur (Tₐᵤₛ) variabel gestaltet werden, indem die Einschalthysterese bei hoher Gebläsespannung (U_{G}) und/oder hoher Ansauglufttemperatur (T_{A}) kleiner gewählt wird als bei niedriger Gebläsespannung (U_{G}) und/oder niedriger Ansauglufttemperatur (T_{A}).

## Patentansprüche

1. Verfahren zur Ein-/Ausschaltsteuerung des Kompressors einer Kraftfahrzeug-Klimaanlage, bei dem
- der Kompressor abgeschaltet wird, wenn die von einem Verdampfertemperaturfühler (5) gemessene Verdampfertemperatur einen vorgebbaren, über 0°C liegenden Abschaltwert (Tₐᵤₛ) unterschreitet, und
- der Abschalttemperaturwert (Tₐᵤₛ) in Abhängigkeit von der Verdampfergebläseleistung (U_{G}) und/oder von der Temperatur (T_{A}) der vom Verdampfergebläse angesaugten Luft mit steigender Gebläseleistung bzw. steigender Ansauglufttemperatur fallend vorgegeben wird, dadurch gekennzeichnet, daß
- der Kompressor jeweils wieder eingeschaltet wird, wenn die vom Verdampfertemperaturfühler gemessene Verdampfertemperatur einen Einschalttemperaturwert überschreitet, der um einen konstanten oder einen mit höherer Gebläseleistung (U_{G}) und/oder höherer Ansauglufttemperatur (T_{A}) kleiner werdenden Einschalthysteresewert über dem Abschalttemperaturwert (Tₐᵤₛ) liegend vorgegeben wird.

2. Verfahren nach Anspruch 1, weiter dadurch gekennzeichnet, daß der Abschalttemperaturwert (Tₐᵤₛ) von einem Maximalwert von etwa 3,5°C bis 4°C bei minimaler Gebläseleistung bzw. Ansauglufttemperatur auf einen Minimalwert von etwa 0,5°C bis 1°C bei maximaler Gebläseleistung bzw. Ansauglufttemperatur fallend vorgegeben wird.

3. Verfahren nach Anspruch 1 oder 2, weiter dadurch gekennzeichnet, daß der Abschalttemperaturwert (Tₐᵤₛ) in Form eines von der Gebläseleistung (U_{G}) und der Ansauglufttemperatur (T_{A}) abhängigen Kennfeldes vorgegeben wird, wobei der Abschalttemperaturwert in Abhängigkeit der jeweils einen Größe bei konstanter anderer Größe monoton fällt und bei maximaler Gebläseleistung sowie bei einer über einem Grenzwert liegenden Ansauglufttemperatur einen konstanten Minimalwert annimmmt.

4. Schaltungsanordnung zur Ein-/Ausschaltsteuerung des Kompressors einer Fahrzeug-Klimaanlage,
gekennzeichnet durch
eine Mikroprozessorsteuerung (6), die zur Durchführung des Verfahrens nach einem der Ansprüche 1 bis 3 eingerichtet ist und hierzu eingangsseitig das Meßsignal (M_{V}) eines Verdampfertemperaturfühlers, das Meßsignal (M_{A}) eines Ansauglufttemperaturfühlers und das Versorgungsspannungssignal (U_{G}) eines Verdampfergebläses empfängt und hieraus anhand eines abgelegten Kennfeldes für den Abschalttemperaturwert in Abhängigkeit von der Verdampfergebläsespannung und/oder von der Ansauglufttemperatur ein Ansteuersignal (S_{M}) zur Ansteuerung eines Ein-/Ausschaltelementes (1) des Kompressors erzeugt.

5. Schaltungsanordnung nach Anspruch 4, weiter gekennzeichnet durch eine Ansteuerstufe (2, R₁), die ein Ausgangssignal (Sₐ) zur Ansteuerung des Ein-/Ausschaltelementes (1) des Kompressors erzeugt, das vom Spannungswert an einem Eingangsknoten (K₁) abhängig ist, der mit der Versorgungsspannung (U_{G}) des Verdampfergebläses und/oder dem Spannungsabfall am Ansauglufttemperaturfühler (3) für die vom Verdampfergebläse angesaugte Luft variiert.

6. Schaltungsanordnung nach Anspruch 5, weiter dadurch gekennzeichnet, daß die Versorgungsspannung (U_{G}) des Verdampfergebläses über einen Bewertungswiderstand (R₄) und die Spannung am Ansauglufttemperaturfühler (3) parallel an den Eingangsknoten (K₁) eingekoppelt sind.

7. Schaltungsanordnung nach Anspruch 5 oder 6, weiter dadurch gekennzeichnet, daß die Ansteuerstufe einen Operationsverstärker (2) beinhaltet, dessen nichtinvertierender Eingang mit dem Mittelabgriff (K₁) eines Spannungsteilers zwischen den Spannungsversorgungspotentialen (U_{B}, U₀) verbunden ist, in dessen einen Teil die Versorgungsspannung (U_{G}) des Verdampfergebläses über einen Bewertungswiderstand (R₄) und/oder die Ausgangsspannung des Ansauglufttemperaturfühlers (3) angelegt ist, während sein invertierender Eingang mit dem Mittelabgriff (K₂) eines aus einem Widerstand (R₃) und einem Verdampfertemperaturfühler (5) bestehenden Spannungsteilers zwischen den Spannungsversorgungspotentialen verbunden ist.

## Claims

1. A method of controlling the switching on and off of the compressor of a motor vehicle air conditioning plant, in which
- the compressor is switched off when the vaporiser temperature measured by a vaporiser temperature sensor (5) falls below a predeterminable switch-off level (Tₐᵤₛ) which is above 0°C, and
- the switch-off temperature level (Tₐᵤₛ) is preset to fall as a function of the vaporiser fan output (U_{G}) and/or the temperature (T_{A}) of the air drawn in by the vaporiser fan with increasing fan output or increasing indrawn air temperature,
- characterised in that the compressor is in each case switched on again when the vaporiser temperature measured by the vaporiser temperature sensor exceeds a switch-on temperature level which is preset to be above the switch-off temperature level (Tₐᵤₛ) by a constant switch-on hysteresis level or one which diminishes with higher fan output (U_{G}) and/or higher indrawn air temperature (T_{A}).

2. A method according to claim 1, further characterised in that the switch-off temperature level (Tₐᵤₛ) is preset to fall from a maximum value of about 3.5°C to 4°C for minimal fan output or indrawn air temperature to a minimal value of about 0.5°C to 1°C for maximum fan output or indrawn air temperature.

3. A method according to claim 1 or 2, further characterised in that the switch-off temperature level (Tₐᵤₛ) is predetermined in the form of a characteristic field dependent upon the fan output (U_{G}) and the indrawn air temperature (T_{A}), the switch-off temperature level respectively falling monotonically as a function of the one quantity with the other quantity kept constant while for maximum fan output and for an indrawn air temperature which is above a limit value, it assumes a constant minimal value.

4. A circuit arrangement for controlling the switching on and off of the compressor of a vehicle air conditioning plant, characterised by
a microprocessor control (6) arranged to carry out the method according to one of claims 1 to 3 and for this purpose receives on the input side the measured signal (M_{V}) from a vaporiser temperature sensor, the measured signal (M_{A}) from an indrawn air temperature sensor and the supply voltage signal (U_{G}) from a vaporiser fan and generates from this and on the basis of a stored characteristic field for the switch-off temperature level as a function of the vaporiser fan voltage and/or the indrawn air temperature, a control signal (S_{M}) for actuating an on/off switching element (1) of the compressor.

5. A circuit arrangement according to claim 4, further characterised by an operating stage (2, R₁) which generates an output signal (Sₐ) to actuate the on/off switching element (1) of the compressor which is dependent upon the voltage level at an input node (K₁) which varies with the supply voltage (U_{G}) of the vaporiser fan and/or the voltage drop at the indrawn air temperature sensor (3) for the air drawn in by the vaporiser fan.

6. A circuit arrangement according to claim 5, further characterised in that the supply voltage (U_{G}) of the vaporiser fan, via an evaluating resistor (R₄), and the voltage at the indrawn air temperature sensor (3), are coupled in parallel to the input node (K₁).

7. A circuit arrangement according to claim 5 or 6, further characterised in that the actuating stage comprises an operational amplifier (2) of which the non-inverting input is connected to the central tap (K₁) of a voltage divider between the voltage supply potentials (U_{B}, U_{O}), in one part of which the supply voltage (U_{G}) of the vaporiser fan is applied via an evaluating resistor (R₄) and/or the output voltage of the indrawn air temperature sensor (3), while its inverting input is connected to the central tap (K₂) of a voltage divider consisting of a resistor (R₃) and a vaporiser temperature sensor (5), between the voltage supply potentials.

## Revendications

1. Procédé de commande d'un circuit marche/arrêt du compresseur d'un système de climatisation d'un véhicule,
- dans lequel le compresseur est arrêté lorsque la température de l'évaporateur mesurée par un capteur de température (5) de l'évaporateur est inférieure à une valeur d'arrêt (Tₐᵤₛ) supérieure à 0°C pouvant être prédéterminée, et
- dans lequel la valeur de la température d'arrêt (Tₐᵤₛ) est prédéterminée en étant décroissante en fonction de la puissance (U_{G}) du ventilateur de l'évaporateur et/ou de la température (T_{A}) de l'air aspiré par le ventilateur de l'évaporateur, la puissance du ventilateur étant croissante ou la température de l'air aspiré étant croissante,
caractérisé
- en ce que le compresseur est à chaque fois remis en marche lorsque la température de l'évaporateur mesurée par le capteur de température de l'évaporateur dépasse une valeur de température de mise en fonctionnement qui est prédéterminée autour d'une valeur d'hystérésis de mise en fonctionnement constante ou d'une valeur d'hystérésis de mise en fonctionnement devenant plus petite lorsque la puissance du ventilateur (U_{G}) est supérieure et/ou lorsque la température (T_{A}) d'air aspiré est supérieure, laquelle valeur d'hystérésis est supérieure à la valeur de la température d'arrêt (Tₐᵤₛ).

2. Procédé selon la revendication 1, caractérisé en outre en ce que la valeur de la température d'arrêt (Tₐᵤₛ) est prédéterminée en étant décroissante, passant d'une valeur maximale comprise entre 3,5°C et 4°C environ lorsque le ventilateur est à sa puissance minimum ou que la température d'air aspiré est à son niveau minimum, à une valeur minimale comprise entre 0,5°C et 1°C environ lorsque le ventilateur est à sa puissance maximum ou que la température d'air aspiré est à son niveau maximum.

3. Procédé selon la revendication 1 ou 2, caractérisé en outre en ce que la valeur de la température d'arrêt (Tₐᵤₛ) est prédéterminée sous la forme d'un champ caractéristique dépendant de la puissance (U_{G}) du ventilateur et de la température (T_{A}) d'air aspiré, où la valeur de la température d'arrêt chute à chaque fois de façon uniforme en fonction d'une grandeur lorsque l'autre grandeur est constante, et où cette valeur de la température d'arrêt prend une valeur minimale constante lorsque le ventilateur à sa puissance maximum, comme dans le cas où une température d'air aspiré se trouve au-dessus d'une valeur limite.

4. Agencement d'un circuit de commande marche/arrêt du compresseur d'un système de climatisation d'un véhicule, caractérisé par une commande (6) à microprocesseur qui est installée pour exécuter le procédé selon l'une quelconque des revendications 1 à 3 et qui, pour y parvenir, reçoit, côté entrée, le signal de mesure (M_{V}) d'un capteur de température de l'évaporateur, le signal de mesure (M_{A}) d'un capteur de température d'air aspiré et le signal de tension d'alimentation (U_{G}) d'un ventilateur d'évaporateur, et qui produit, à partir de ces signaux, à l'aide d'un champ caractéristique distribué pour la valeur de température d'arrêt, un signal d'excitation (S_{M}) pour déclencher un élément de marche/arrêt (1) du compresseur en fonction de la tension du ventilateur de l'évaporateur et/ou de la température d'air aspiré.

5. Agencement du circuit selon la revendication 4, caractérisé en outre par un étage d'excitation (2, R₁) qui produit un signal de sortie (Sₐ) pour déclencher l'élément de marche/arrêt (1) du compresseur, lequel signal de sortie dépend de la valeur de tension au niveau d'un point nodal d'entrée (K₁) qui varie avec la tension d'alimentation (U_{G}) du ventilateur de l'évaporateur et/ou avec la chute de tension au niveau du capteur (3) de température d'air aspiré pour l'air aspiré par le ventilateur de l'évaporateur.

6. Agencement du circuit selon la revendication 5, caractérisé en outre en ce que la tension d'alimentation (U_{G}) du ventilateur de l'évaporateur via une résistance de pondération (R₄) et la tension au niveau du capteur (3) de température d'air aspiré sont couplées parallèlement au point nodal d'entrée (K₁).

7. Agencement du circuit selon la revendication 5 ou 6, caractérisé en outre en ce que l'étage d'excitation contient un amplificateur d'opération (2) dont l'entrée non inverseuse est connectée à la prise médiane (K₁) d'un diviseur de tension placé entre les potentiels d'alimentation en tension (U_{B}, U₀), dans une partie duquel sont appliquées la tension d'alimentation (U_{G}) du ventilateur de l'évaporateur via une résistance de pondération (R₄) et/ou la tension de sortie du capteur (3) de température d'air aspiré, tandis que l'entrée inverseuse de l'amplificateur d'opération est connectée à la prise médiane (K₂) d'un diviseur de tension se composant d'une résistance (R₃) et d'un capteur (5) de température de l'évaporateur, ce diviseur de tension étant placé entre les potentiels d'alimentation en tension.
